# FASCICULE DE BREVET EUROPEEN

(11) **EP 2 092 179 B1**
(45) Date de publication et mention de la délivrance du brevet: **18.08.2010**
(21) Numéro de dépôt: 07857524.8
(22) Date de dépôt: 13.12.2007
(51) Int. Cl.: F02D 21/08, F02M 25/07, F16K 37/00, F02D 41/22

(54) **METHODE DE DIAGNOSTIC DU FONCTIONNEMENT D'UN ACTIONNEUR**
STELLGLIEDBETÄTIGUNGSDIAGNOSEVERFAHREN
ACTUATOR OPERATION DIAGNOSTICS METHOD

(30) Priorité: 20.12.2006 FR 0611127
(43) Date de publication de la demande: 26.08.2009
(73) Titulaire: Renault S.A.S., 92100 Boulogne-Billancourt (FR)
(72) Inventeur: MALAGUZZI, Claudio, 92300 Levallois-Perret (FR); SCHMIDTLIN, Sophie, 92420 Vaucresson (FR); TUFFIER, Guillaume, 92400 Courbevoie (FR)
(86) Numéro de dépôt international: PCT/EP2007/063877
(87) Numéro de publication internationale: WO 2008/074722

(56) Documents cités:
- FR-A1- 2 836 517
- JP-A- 62 279 261
- US-B2- 7 036 486

## Description

### DOMAINE TECHNIQUE AUQUEL SE RAPPORTE L'INVENTION

La présente invention concerne de manière générale le contrôle du fonctionnement des actionneurs.

Elle concerne plus particulièrement une méthode de diagnostic du fonctionnement d'un actionneur comportant un élément adapté à être déplacé entre des positions extrêmes, comportant les étapes d'acquisition par un capteur de valeurs de la position de l'élément de l'actionneur pendant une durée de temporisation, à la suite de l'émission d'une consigne de déplacement visant à positionner cet élément dans l'une desdites positions extrêmes, et de calcul de l'écart entre chaque valeur de position acquise et une valeur de position de référence associée à ladite position extrême.

L'invention trouve une application particulièrement avantageuse pour établir le diagnostic du fonctionnement d'une vanne de recirculation des gaz d'échappement d'un moteur à combustion interne.

### ARRIÈRE-PLAN TECHNOLOGIQUE

Les moteurs à combustion interne diesel de véhicule automobile comprennent généralement un circuit de recirculation des gaz d'échappement pourvu d'une vanne permettant de réguler le flux de gaz d'échappement qui traverse le circuit de recirculation. Cette vanne possède un élément obturateur tel qu'une soupape ou un volet dont la position peut varier continûment entre une position d'ouverture complète où la section de passage du flux de gaz d'échappement recirculé est maximale et une position de fermeture complète où la section de passage du flux de gaz d'échappement recirculé est minimale.

Pour piloter de manière optimale le moteur à combustion, il est important de réaliser un diagnostic du fonctionnement de la vanne permettant de vérifier si la vanne répond correctement aux consignes d'ouverture ou de fermeture complète.

Selon une méthode de diagnostic connue, telle que décrite par exemple dans le document FR 2836517, à la suite de l'émission d'une consigne de déplacement visant, par exemple, à positionner la soupape en une position de fermeture complète, on enregistre la position réelle de la soupape pendant une durée de temporisation donnée. Tout au long de cette temporisation, on calcule l'écart entre chaque position réelle enregistrée et une position de fermeture de référence. Si chaque valeur de l'écart calculé est inférieure à une valeur seuil fixée, on diagnostique que la soupape est bien fermée et que la vanne fonctionne correctement. A l'inverse, si chaque valeur de l'écart calculé est supérieure à la valeur seuil fixée, on diagnostique un état d'ouverture de la soupape et on en déduit un dysfonctionnement de la vanne.

Le diagnostic du fonctionnement de la vanne à la suite d'une consigne d'ouverture complète est réalisée de manière similaire.

Cependant, cette méthode ne permet pas de réaliser un diagnostic du fonctionnement de la vanne dans le cas où, notamment, la soupape de la vanne est soumise à des oscillations, si les valeurs de l'écart oscillent autour de la valeur seuil fixée. Dans ce cas, en effet, la temporisation est réinitialisée à chaque fois que la valeur passe au dessus ou en dessous de la valeur seuil, ce qui rend impossible l'établissement du diagnostic.

Ainsi, même si la soupape n'est pas complètement fermée cette méthode de diagnostic ne permet pas de le détecter.

En outre, lorsque le capteur génère une erreur de mesure ponctuelle, cette méthode de diagnostic ne permet pas d'établir un diagnostic rapide du fonctionnement la vanne. La méthode de diagnostic est alors relancée au cours d'une autre temporisation, ce qui retarde le diagnostic.

Une solution pour obtenir quand même un diagnostic dans les deux cas énoncés ci-dessus, consiste à limiter la durée de la temporisation à une valeur très faible. Cependant, avec une telle solution, la méthode de diagnostic est très sensible aux perturbations de signal du capteur telles que des micro-coupures du signal.

### OBJET DE L'INVENTION

La présente invention propose une nouvelle méthode de diagnostic plus fiable.

A cet effet, l'invention propose une méthode de diagnostic du fonctionnement d'un actionneur comportant un élément adapté à être déplacé entre des positions extrêmes, comportant les étapes suivantes :
a) acquisition par un capteur de valeurs de la position de l'élément de l'actionneur pendant une durée de temporisation, à la suite de l'émission d'une consigne de déplacement visant à positionner cet élément dans l'une desdites positions extrêmes,
b) calcul de l'écart entre chaque valeur de position acquise à l'étape a) et une valeur de position de référence associée à ladite position extrême,
   dans laquelle il est prévu les étapes suivantes :
c) détermination de la quantité de valeurs dudit écart qui sont inférieures à une valeur seuil et/ou de la quantité de valeurs dudit écart qui sont supérieures à ladite valeur seuil,
d) obtention du diagnostic du fonctionnement de l'actionneur en fonction de ladite quantité.

La méthode de diagnostic selon l'invention met ainsi en oeuvre un calcul statistique, dit d'analyse de population, qui tient compte de la répartition des valeurs de la position réelle de l'élément de l'actionneur autour de la valeur de référence correspondante. Un tel calcul statistique permet, quel que soit le comportement de l'élément de l'actionneur ou en cas de panne ponctuelle du capteur de position de cet élément, de réaliser un diagnostic du fonctionnement de la vanne.

En particulier, lors d'une panne ponctuelle du capteur, la valeur mesurée n'empêchera pas d'établir un diagnostic et elle n'aura qu'une faible influence sur le diagnostic final par rapport au nombre de mesures effectuées.

De même en cas d'oscillations de la position de l'élément de l'actionneur autour de la position de référence, la méthode de diagnostic permet d'établir un diagnostic adapté.

Le diagnostic du fonctionnement de l'actionneur est ainsi plus fiable.

Selon une première caractéristique avantageuse de la méthode de diagnostic conforme à l'invention, entre les étapes c) et d), on calcule un rapport entre la quantité desdites valeurs de l'écart inférieures à ladite valeur seuil et la quantité totale de valeurs de l'écart et à l'étape d) on compare la valeur du rapport obtenu avec la valeur d'un rapport de référence et le diagnostic du fonctionnement de l'actionneur est réalisé en fonction du résultat de cette comparaison.

Selon une autre caractéristique avantageuse de la méthode de diagnostic conforme à l'invention, entre les étapes c) et d), on calcule un rapport entre la quantité desdites valeurs du rapport inférieures à ladite valeur seuil et la quantité desdites valeurs de l'écart supérieures à ladite valeur seuil et à l'étape d) on compare la valeur du rapport obtenu avec la valeur d'un rapport de référence et le diagnostic du fonctionnement de l'actionneur est réalisé en fonction du résultat de cette comparaison.

Selon une autre caractéristique avantageuse de la méthode de diagnostic conforme à l'invention, entre les étapes c) et d), on calcule un rapport entre la quantité desdites valeurs de l'écart supérieures à ladite valeur seuil et la quantité totale de valeurs de l'écart et à l'étape d) on compare la valeur du rapport obtenu avec la valeur d'un rapport de référence et le diagnostic du fonctionnement de l'actionneur est réalisé en fonction du résultat de cette comparaison.

Selon une autre caractéristique avantageuse de la méthode de diagnostic conforme à l'invention, lorsqu'il est diagnostiqué un fonctionnement correct de l'actionneur, la position extrême prise par l'actionneur est mémorisée en tant que position de référence.

Selon une autre caractéristique avantageuse de la méthode de diagnostic conforme à l'invention, lorsque l'écart calculé entre la dernière position acquise dudit élément à la fin de la durée de temporisation et ladite valeur de référence, est éloigné de ladite valeur seuil et se situe au-delà d'une autre valeur seuil, un diagnostic spécifique de l'actionneur est établi.

Selon une autre caractéristique avantageuse de la méthode de diagnostic conforme à l'invention, l'actionneur est une vanne et ledit élément déplaçable est un élément d'obturation du passage d'un fluide, les positions extrêmes de l'élément d'obturation comprenant une position de fermeture complète dans laquelle la section de passage du fluide est minimale et une position d'ouverture complète dans laquelle la section de passage du fluide est maximale, et en ce que ladite consigne de déplacement de cet élément est une consigne de fermeture complète.

Selon une autre caractéristique avantageuse de la méthode de diagnostic conforme à l'invention, l'actionneur est une vanne et ledit élément déplaçable est un élément d'obturation du passage d'un fluide, les positions extrêmes de l'élément d'obturation comprenant une position de fermeture complète dans laquelle la section de passage du fluide est minimale et une position d'ouverture complète dans laquelle la section de passage du fluide est maximale, et en ce que ladite consigne de déplacement est une consigne d'ouverture complète.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un système de recirculation d'un moteur comportant une vanne à soupape ;
- la figure 2 est un diagramme donnant, pour une consigne de fermeture complète de la soupape, l'écart entre la position réelle de la soupape et une position de référence, pendant une durée de temporisation donnée, selon un premier cas de fermeture de la soupape ;
- la figure 3 est un diagramme similaire au diagramme de la figure 2 selon un deuxième cas de fermeture de la soupape ;
- la figure 4 est un diagramme similaire au diagramme de la figure 2 selon un troisième cas de fermeture de la soupape ;
- la figure 5 est un diagramme similaire au diagramme de la figure 2 selon un quatrième cas de fermeture de la soupape ;
- la figure 6 est un organigramme de la méthode de diagnostic selon l'invention ;
- la figure 7 est un organigramme d'une première variante de la méthode de diagnostic selon l'invention ;
- la figure 8 est un organigramme d'une deuxième variante de la méthode de diagnostic selon l'invention.

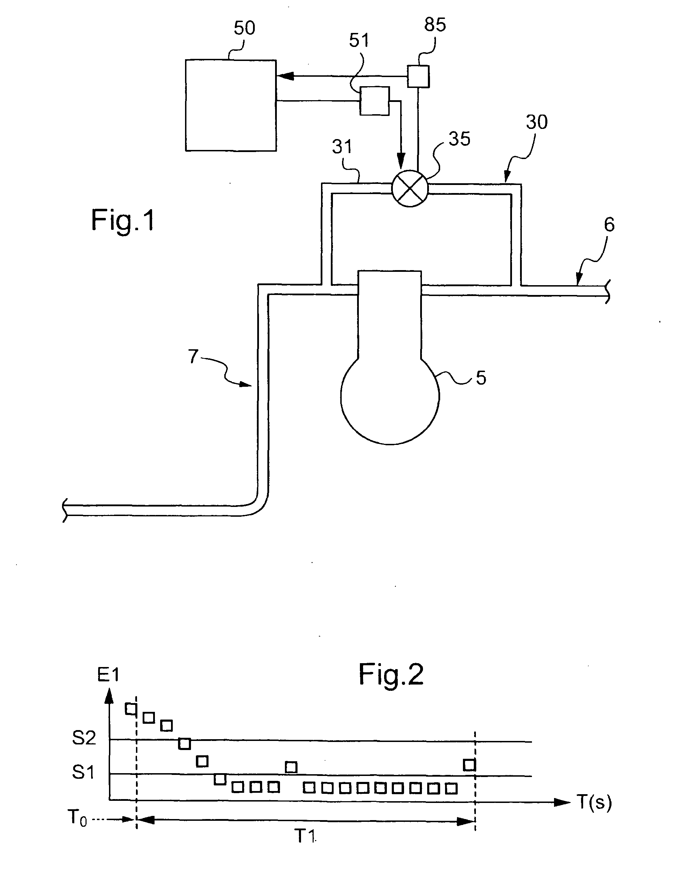

On a représenté sur la figure 1 une partie d'un moteur à combustion interne de véhicule automobile et un système de recirculation des gaz d'échappement du moteur. Le moteur comporte un circuit d'admission 7 de gaz frais dans des cylindres 5, ainsi qu'un circuit d'échappement 6 permettant d'évacuer les gaz d'échappement des cylindres 5.

Le système de recirculation des gaz d'échappement comprend un circuit de recirculation 30 des gaz d'échappement qui comporte une conduite de recirculation 31 piquée sur le circuit d'échappement 6 et débouchant dans le circuit d'admission 7 de gaz frais, de manière à prélever une partie des gaz d'échappement du circuit d'échappement 6 et à les réinjecter dans le circuit d'admission 7 de gaz frais.

Le circuit de recirculation 30 des gaz d'échappement comporte une vanne 35 de recirculation conçue pour réguler le flux de gaz d'échappement traversant ledit circuit de recirculation 30 des gaz d'échappement. Ici, cette vanne 35 est une vanne à soupape (non représentée), mais, en variante, on peut prévoir d'utiliser une vanne à volet.

Il est prévu en outre des moyens de commande 51 adaptés à commander l'ouverture et la fermeture de la vanne 35, pour faire varier la position de la soupape continûment entre une position d'ouverture complète où la section de passage du flux de gaz d'échappement recirculé est maximale et une position de fermeture complète où la section de passage du flux de gaz d'échappement recirculé est minimale.

Les moyens de commande 51 de l'ouverture et de la fermeture de la vanne 35 sont eux-même pilotés par un calculateur 50 en fonction de différents paramètres de fonctionnement du moteur pour obtenir un fonctionnement optimal de ce dernier.

Il est également prévu un capteur 85 qui permet de repérer la position P1 de la soupape de la vanne 35 et qui est en liaison avec le calculateur 50 (figures 1 et 6 à 8).

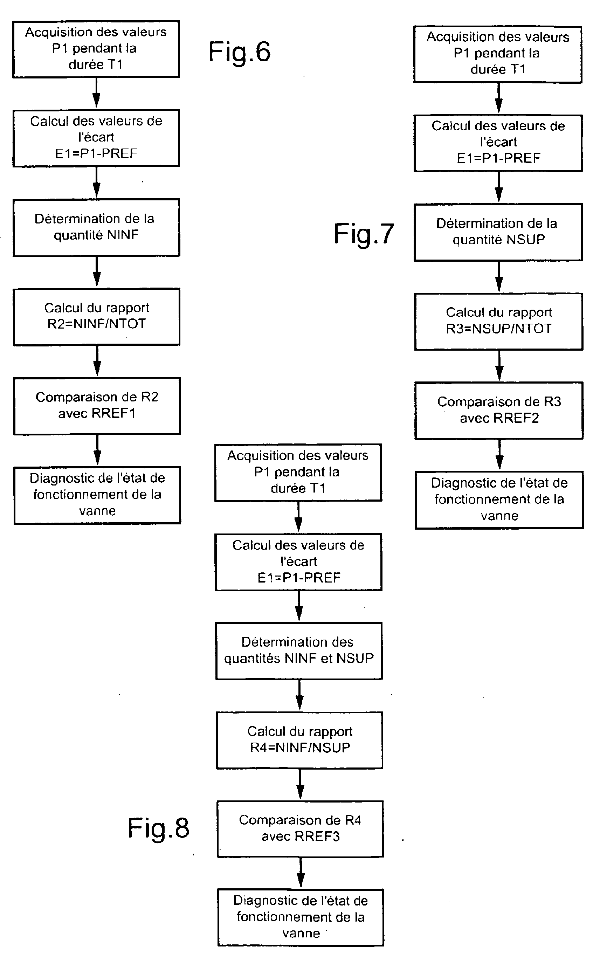

La calculateur contient en mémoire les positions de fermeture et/ou d'ouverture complètes de référence notées PREF (figures 6 à 8), qui peuvent être déterminées par le fournisseur, en usine, ou encore à la suite de plusieurs essais de roulage.

Dans un souci de simplification, lorsqu'il est fait référence à l'ouverture ou à la fermeture de la vanne, il s'agit bien évidemment de l'ouverture ou de la fermeture de la soupape de la vanne.

La méthode de diagnostic du fonctionnement de la vanne est décrite ci-dessous pour un cas où le calculateur 50 transmet à la vanne 35, via les moyens de commande 51, une consigne de fermeture complète.

Cette méthode est illustrée par l'organigramme de la figure 6.

Bien entendu, la méthode de diagnostic est également applicable pour une consigne d'ouverture complète de la vanne.

A la suite de la consigne de fermeture complète de la vanne, le calculateur déclenche une durée de temporisation initiale T0, d'une valeur par exemple de 500ms, qui doit permettre à la soupape d'atteindre la position de fermeture complète de référence PREF.

Lorsque s'achève la durée de temporisation initiale T0, le calculateur 50 déclenche une deuxième temporisation T1.

Tout au long de cette deuxième temporisation T1, le capteur 85 acquiert des valeurs de la position P1 de la soupape de la vanne 35.

Le calculateur détermine alors l'écart E1 entre chaque valeur de position P1 acquise et la valeur de position de fermeture complète de référence PREF. L'unité est ici un pourcentage de tension d'alimentation du capteur. Une position selon cette unité est obtenue en divisant la valeur de la position lue par le capteur, exprimée en millivolt, par la valeur de la tension d'alimentation du capteur, elle aussi en millivolt, le tout étant multiplié par cent. En variante, l'unité du millivolt pourrait être être remplacée par une autre grandeur physique.

On obtient alors, comme représenté sur les figures 2 à 4 pour différents cas de fermeture de la soupape, la répartition des valeurs de l'écart E1 autour d'une première valeur seuil S1.

Ici la valeur seuil S1 est fixée à 5%.

Il est également prévu de tenir compte, pour le diagnostic de l'état de fonctionnement de la vanne, de la répartition des valeurs de l'écart E1 autour d'une deuxième valeur seuil S2 fixée ici à 10%.

Avantageusement, selon l'invention, le calculateur détermine la quantité NINF de valeurs de l'écart E1 qui sont inférieures à la valeur seuil S1.

Puis, le calculateur calcule un rapport R2 entre la quantité NINF de valeurs de l'écart E1 inférieures à la valeur seuil S1 et la quantité totale NTOT de valeurs de l'écart E1.

Le calculateur 50 établit alors un diagnostic de l'état de fonctionnement de la vanne à partir du résultat de la comparaison entre la valeur du rapport R2 obtenu et la valeur d'un rapport de référence RREF1.

Selon le premier cas représenté à la figure 2, seules six des dix-neuf valeurs de l'écart E1 sont situées au dessus de la valeur seuil S1. Le rapport R2 est alors supérieur au rapport de référence RREF1 fixé, qui est ici de 0,6. En variante, le rapport de référence RREF1 peut prendre une valeur entre 0,6 et 0,9. Il est alors diagnostiqué que la soupape est bien fermée et donc que la vanne fonctionne correctement. La méthode de diagnostic est ensuite arrêtée.

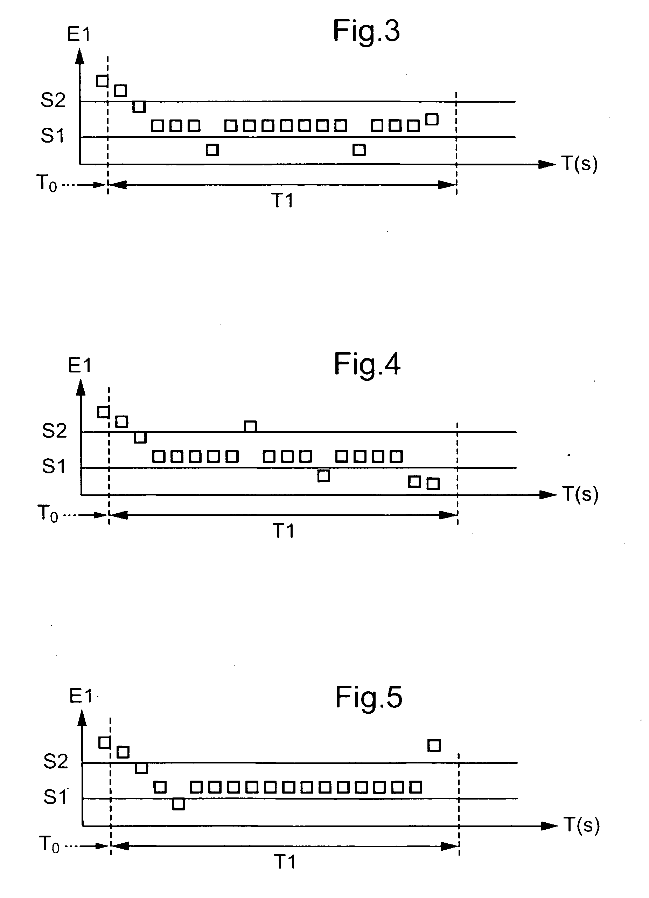

Selon un deuxième et un troisième cas représentés aux figures 3 et 4, seules deux valeurs de l'écart E1 sont situées en dessous de la valeur seuil S1. Le rapport R2 est inférieur au rapport de référence RREF1 fixé. La soupape n'est donc pas totalement fermée et il est diagnostiqué un premier niveau d'ouverture de la vanne qui traduit un dysfonctionnement de celle-ci. La méthode de diagnostic est relancée tant que la consigne de fermeture complète de la soupape est maintenue.

En outre, selon le troisième cas, on observe que vers la moitié de la durée de temporisation T1, une des valeurs de l'écart E1 est située au-delà de la valeur seuil S2 qui délimite un deuxième niveau d'ouverture plus important de la vanne. Mais, cette valeur de l'écart E1 n'étant pas la dernière des valeurs acquises dans la durée de temporisation, elle ne génère pas un diagnostic de deuxième niveau d'ouverture de la vanne, à l'inverse du quatrième cas décrit ci-dessous.

Selon un quatrième cas représenté à la figure 5, seule une valeur de l'écart E1 est située en dessous de la valeur seuil S1. En outre, la valeur de l'écart E1 à la fin de la durée de temporisation T1 est située au-dessus de la valeur seuil S2. Cette valeur de l'écart E1 étant la dernière des valeurs acquises dans la durée de temporisation, elle génère un diagnostic de deuxième niveau d'ouverture de la vanne qui traduit un dysfonctionnement de celle-ci plus important que dans le deuxième et le troisième cas (figures 3 et 4).

De manière générale, lorsque le calculateur diagnostique un état d'ouverture de premier niveau ou un état d'ouverture de deuxième niveau de la vanne alors que celle-ci a reçu une consigne de fermeture complète, le calculateur adapte le pilotage des différents organes du moteur de manière à obtenir un fonctionnement optimal du moteur malgré le dysfonctionnement de celle-ci et en attendant sa remise en état. Il en est de même lorsque le calculateur diagnostique une ouverture incomplète de la vanne alors que celle-ci a reçu une consigne d'ouverture complète.

Enfin, lorsqu'il est diagnostiqué un fonctionnement correct de la vanne lors d'une consigne de fermeture ou d'ouverture complète de la soupape de celle-ci, la position extrême prise par la soupape peut être mémorisée en tant que dernière position de référence connue de fermeture ou d'ouverture.

La présente invention n'est nullement limitée au mode de réalisation décrit et représenté, mais l'homme du métier saura y apporter toute variante conforme à son esprit.

Bien entendu; en variante comme illustré par l'organigramme de la figure 7, on peut prévoir que le rapport R2 calculé soit remplacé par un autre rapport R3 entre la quantité NINF de valeurs de l'écart E1 inférieures à la valeur seuil S1 et le nombre NSUP de valeurs de l'écart E1 supérieures à la valeur seuil S1. Le diagnostic est alors réalisé en fonction du résultat de la comparaison entre la valeur du rapport R3 et la valeur d'un autre rapport de référence RREF2.

En variante, comme illustré par l'organigramme de la figure 8, on peut prévoir que le rapport R2 calculé soit remplacé par le rapport R4 entre la quantité NSUP de valeurs de l'écart E1 supérieures à la valeur seuil S1 et la quantité totale NTOT de valeurs de l'écart E1. Le diagnostic est alors réalisé en fonction du résultat de la comparaison entre la valeur du rapport R4 et la valeur d'un autre rapport de référence RREF3.

La méthode de diagnostic du fonctionnement d'une vanne d'un circuit de recirculation des gaz d'échappement, décrite ci-dessus, peut être appliquée à tout autre type d'actionneur tel que, par exemple, une vanne d'un circuit d'admission d'air.

## Revendications

1. Méthode de diagnostic du fonctionnement d'un actionneur (35) comportant un élément adapté à être déplacé entre des positions extrêmes, comportant les étapes suivantes :
a) acquisition par un capteur (85) de valeurs de la position (P1) de l'élément de l'actionneur (35) pendant une durée de temporisation (T1), à la suite de l'émission d'une consigne de déplacement visant à positionner cet élément dans l'une desdites positions extrêmes,
b) calcul de l'écart (E1) entre chaque valeur de position acquise à l'étape a) et une valeur de position de référence (PREF) associée à ladite position extrême,
**caractérisée en ce qu'**il est prévu les étapes suivantes :
c) détermination de la quantité (NINF) de valeurs dudit écart (E1) qui sont inférieures à une valeur seuil (S1) et/ou de la quantité (NSUP) de valeurs dudit écart (E1) qui sont supérieures à ladite valeur seuil (S1),
d) obtention du diagnostic du fonctionnement de l'actionneur (35) en fonction de ladite quantité (NINF, NSUP).

2. Méthode de diagnostic selon la revendication précédente, **caractérisée en ce qu'**entre les étapes c) et d), on calcule un rapport (R2) entre la quantité (NINF) desdites valeurs de l'écart (E1) inférieures à ladite valeur seuil (S1) et la quantité totale (NTOT) de valeurs de l'écart (E1) et **en ce qu'**à l'étape d) on compare la valeur du rapport (R2) obtenu avec la valeur d'un rapport de référence (RREF1) et le diagnostic du fonctionnement de l'actionneur (35) est réalisé en fonction du résultat de cette comparaison.

3. Méthode de diagnostic selon la revendication 1, **caractérisée en ce qu'**entre les étapes c) et d), on calcule un rapport (R3) entre la quantité (NINF) desdites valeurs de l'écart (E1) inférieures à ladite valeur seuil (S1) et la quantité (NSUP) desdites valeurs de l'écart (E1) supérieures à ladite valeur seuil (S1) et **en ce qu'**à l'étape d) on compare la valeur du rapport (R3) obtenu avec la valeur d'un rapport de référence (RREF2) et le diagnostic du fonctionnement de l'actionneur (35) est réalisé en fonction du résultat de cette comparaison.

4. Méthode de diagnostic selon la revendication 1, **caractérisée en ce qu'**entre les étapes c) et d), on calcule un autre rapport (R4) entre la quantité (NSUP) desdites valeurs de l'écart (E1) supérieures à ladite valeur seuil (S1) et la quantité totale (NTOT) de valeurs de l'écart (E1) et **en ce qu'**à l'étape d) on compare la valeur de l'autre rapport (R4) obtenu avec la valeur d'un rapport de référence (RREF3) et le diagnostic du fonctionnement de l'actionneur (35) est réalisé en fonction du résultat de cette comparaison.

5. Méthode de diagnostic selon l'une des revendications précédentes, **caractérisée en ce que**, lorsqu'il est diagnostiqué un fonctionnement correct de l'actionneur (35), la position extrême prise par l'actionneur (35) est mémorisée en tant que position de référence.

6. Méthode de diagnostic selon l'une des revendications précédentes, **caractérisée en ce que**, lorsque l'écart (E1) calculé entre la dernière position acquise dudit élément à la fin de la durée de temporisation (T1) et ladite valeur de référence, est éloigné de ladite valeur seuil (S1) et se situe au-delà d'une autre valeur seuil (S2), un diagnostic spécifique de l'actionneur est établi.

7. Méthode de diagnostic selon l'une des revendications précédentes, **caractérisée en ce que** l'actionneur (35) est une vanne (35) et ledit élément déplaçable est un élément d'obturation du passage d'un fluide, les positions extrêmes de l'élément d'obturation comprenant une position de fermeture complète dans laquelle la section de passage du fluide est minimale et une position d'ouverture complète dans laquelle la section de passage du fluide est maximale, et **en ce que** ladite consigne de déplacement de cet élément est une consigne de fermeture complète.

8. Méthode de diagnostic selon l'une des revendications précédentes, **caractérisé en ce que** l'actionneur (35) est une vanne (35) et ledit élément déplaçable est un élément d'obturation du passage d'un fluide, les positions extrêmes de l'élément d'obturation comprenant une position de fermeture complète dans laquelle la section de passage du fluide est minimale et une position d'ouverture complète dans laquelle la section de passage du fluide est maximale, et **en ce que** ladite consigne de déplacement est une consigne d'ouverture complète.

## Claims

1. Method of diagnosing the operation of an actuator (35) comprising an element designed to be moved between extreme positions, comprising the following steps:
a) acquisition by a sensor (85) of values of the position (P1) of the element of the actuator (35) for a timer duration (T1), following the transmission of a movement setpoint aiming to position this element in one of said extreme positions,
b) calculation of the difference (E1) between each position value acquired in step a) and a reference position value (PREF) associated with said extreme position,
**characterized in that** provision is made for the following steps:
c) determination of the quantity (NINF) of values of said difference (E1) that are below a threshold value (S1) and/or of the quantity (NSUP) of values of said difference (E1) that are above said threshold value (S1),
d) obtaining the diagnosis of the operation of the actuator (35) according to said quantity (NINF, NSUP).

2. Diagnosis method according to the preceding claim, **characterized in that**, between steps c) and d), a ratio (R2) is calculated between the quantity (NINF) of said values of the difference (E1) below said threshold value (S1) and the total quantity (NTOT) of values of the difference (E1) and **in that**, in step d), the value of the ratio (R2) obtained is compared with the value of a reference ratio (RREF1) and the operation of the actuator (35) is diagnosed according to the result of this comparison.

3. Diagnosis method according to Claim 1, **characterized in that**, between steps c) and d), a ratio (R3) is calculated between the quantity (NINF) of said values of the difference (E1) below said threshold value (S1) and the quantity (NSUP) of said values of the difference (E1) above said threshold value (S1) and **in that**, in step d), the value of the ratio (R3) obtained is compared with the value of a reference ratio (RREF2) and the operation of the actuator (35) is diagnosed according to the result of this comparison.

4. Diagnosis method according to Claim 1, **characterized in that**, between steps c) and d), another ratio (R4) is calculated between the quantity (NSUP) of said values of the difference (E1) above said threshold value (S1) and the total quantity (NTOT) of values of the difference (E1) and **in that**, in step d), the value of the other ratio (R4) obtained is compared with the value of a reference ratio (RREF3) and the operation of the actuator (35) is diagnosed according to the result of this comparison.

5. Diagnosis method according to one of the preceding claims, **characterized in that**, when correct operation of the actuator (35) is diagnosed, the extreme position assumed by the actuator (35) is stored as reference position.

6. Diagnosis method according to one of the preceding claims, **characterized in that**, when the difference (E1) calculated between the last acquired position of said element at the end of the timer duration (T1) and said reference value, is a long way from said threshold value (S1) and is located above another threshold value (S2), a specific diagnosis of the actuator is established.

7. Diagnosis method according to one of the preceding claims, **characterized in that** the actuator (35) is a valve (35) and said movable element is an element for blocking the passage of a fluid, the extreme positions of the blocking element comprising a fully closed position in which the section for passage of the fluid is minimal and a fully open position in which the section for passage of the fluid is maximal, and **in that** said movement setpoint for said element is a fully closed setpoint.

8. Diagnosis method according to one of the preceding claims, **characterized in that** the actuator (35) is a valve (35) and said movable element is an element for blocking the passage of a fluid, the extreme positions of the blocking element comprising a fully closed position in which the section for passage of the fluid is minimal and a fully open position in which the section for passage of the fluid is maximal, and **in that** said movement setpoint is a fully open setpoint.

## Patentansprüche

1. Verfahren zur Diagnose des Betriebs eines Stellglieds (35), das ein Element aufweist, welches geeignet ist, um zwischen Endstellungen verschoben zu werden, das die folgenden Schritte aufweist:
a) Erfassung, durch einen Sensor (85), von Werten der Stellung (P1) des Elements des Stellglieds (35) während einer Verzögerungsdauer (T1) nach der Ausgabe einer Verschiebungsanweisung, die darauf abzielt, dieses Element in einer der Endstellungen zu positionieren,
b) Berechnung der Abweichung (E1) zwischen jedem im Schritt a) erfassten Stellungswert und einem der Endstellung zugeordneten Bezugsstellungswert (PREF), **dadurch gekennzeichnet, dass** die folgenden Schritte vorgesehen sind:
c) Bestimmung der Menge (NINF) von Werten der Abweichung (E1), die unter einem Schwellwert (S1) liegen, und/oder der Menge (NSUP) von Werten der Abweichung (E1), die über dem Schwellwert (S1) liegen,
d) Erhalt der Diagnose des Betriebs des Stellglieds (35) in Abhängigkeit von der Menge (NINF, NSUP).

2. Diagnoseverfahren nach dem vorhergehenden Anspruch, **dadurch gekennzeichnet, dass** zwischen den Schritten c) und d) ein Verhältnis (R2) zwischen der Menge (NINF) der Werte der Abweichung (E1), die unter dem Schwellwert (S1) liegen, und der Gesamtmenge (NTOT) von Werten der Abweichung (E1) berechnet wird, und dass im Schritt d) der Wert des erhaltenen Verhältnisses (R2) mit dem Wert eines Bezugsverhältnisses (RREF1) verglichen wird, und die Diagnose des Betriebs des Stellglieds (35) in Abhängigkeit vom Ergebnis dieses Vergleichs durchgeführt wird.

3. Diagnoseverfahren nach Anspruch 1, **dadurch gekennzeichnet, dass** zwischen den Schritten c) und d) ein Verhältnis (R3) zwischen der Menge (NINF) der Werte der Abweichung (E1), die unter dem Schwellwert (S1) liegen, und der Menge (NSUP) der Werte der Abweichung (E1) berechnet wird, die über dem Schwellwert (S1) liegen, und dass im Schritt d) der Wert des erhaltenen Verhältnisses (R3) mit dem Wert eines Bezugsverhältnisses (RREF2) verglichen wird, und die Diagnose des Betriebs des Stellglieds (35) in Abhängigkeit vom Ergebnis dieses Vergleichs durchgeführt wird.

4. Diagnoseverfahren nach Anspruch 1, **dadurch gekennzeichnet, dass** zwischen den Schritten c) und d) ein weiteres Verhältnis (R4) zwischen der Menge (NSUP) der Werte der Abweichung (E1), die über dem Schwellwert (S1) liegen, und der Gesamtmenge (NTOT) von Werten der Abweichung (E1) berechnet wird, und dass im Schritt d) der Wert des weiteren erhaltenen Verhältnisses (R4) mit dem Wert eines Bezugsverhältnisses (RREF3) verglichen wird, und die Diagnose des Betriebs des Stellglieds (35) in Abhängigkeit vom Ergebnis dieses Vergleichs durchgeführt wird.

5. Diagnoseverfahren nach einem der vorhergehenden Ansprüche, **dadurch gekennzeichnet, dass**, wenn ein korrekter Betrieb des Stellglieds (35) diagnostiziert wird, die vom Stellglied (35) eingenommene Endstellung als Bezugsstellung gespeichert wird.

6. Diagnoseverfahren nach einem der vorhergehenden Ansprüche, **dadurch gekennzeichnet, dass**, wenn die berechnete Abweichung (E1) zwischen der letzten erreichten Stellung des Elements am Ende der Verzögerungsdauer (T1) und dem Bezugswert vom Schwellwert (S1) entfernt ist und sich jenseits eines weiteren Schwellwerts (S2) befindet, eine spezifische Diagnose des Stellglieds erstellt wird.

7. Diagnoseverfahren nach einem der vorhergehenden Ansprüche, **dadurch gekennzeichnet, dass** das Stellglied (35) ein Ventil (35) und das verschiebbare Element ein Verschlusselement des Durchlasses eines Fluids ist, wobei die Endstellungen des Verschlusselements eine Stellung des vollständigen Verschlusses, in der der Durchlassquerschnitt des Fluids minimal ist, und eine Stellung der vollständigen Öffnung enthalten, in der der Durchlassquerschnitt des Fluids maximal ist, und dass die Verschiebeanweisung dieses Elements eine Anweisung zum vollständigen Schließen ist.

8. Diagnoseverfahren nach einem der vorhergehenden Ansprüche, **dadurch gekennzeichnet, dass** das Stellglied (35) ein Ventil (35) und das verschiebbare Element ein Verschlusselement des Durchlasses eines Fluids ist, wobei die Endstellungen des Verschlusselements eine Stellung des vollständigen Verschlusses, in der der Durchlassquerschnitt des Fluids minimal ist, und eine Stellung der vollständigen Öffnung enthalten, in der der Durchlassquerschnitt des Fluids maximal ist, und dass die Verschiebeanweisung eine Anweisung zur vollständigen Öffnung ist.
